# FASCICULE DE BREVET EUROPEEN

(11) **EP 1 502 813 B1**
(45) Date de publication et mention de la délivrance du brevet: **20.08.2008**
(21) Numéro de dépôt: 04291917.5
(22) Date de dépôt: 27.07.2004
(51) Int. Cl.: B60Q 1/12, G01C 17/28

(54) **Système d'éclairage à fonction virage comprenant un dispositif de controle et des moyens de detection de virage autonomes**
Kurvenlichtsystem enthaltend eine Steuervorrichtung und autonome Kurvenerkennungsmittel
Cornering illumination device comprising a control device and stand-alone turning detection means

(30) Priorité: 01.08.2003 FR 0309566
(43) Date de publication de la demande: 02.02.2005
(73) Titulaire: VALEO VISION, 93012 Bobigny Cédex (FR)
(72) Inventeur: Menard, Cyril, c/o Valeo Vision, 93012 Bobigny Cedex (FR)

(56) Documents cités:
- DE-C- 19 911 599
- US-A1- 2001 050 340
- US-A1- 2002 080 617
- US-A1- 2002 083 605
- US-A1- 2003 023 380
- US-A1- 2003 138 132
- KIMBERLEY W: "LEADING LIGHTS" AUTOMOTIVE ENGINEER, MECHANICAL ENGINEERING PUBL.LTD. BURY ST.EDMUNDS, GB, vol. 27, no. 7, juillet 2002 (2002-07), pages 46-48, XP001123440 ISSN: 0307-6490
- PATENT ABSTRACTS OF JAPAN vol. 006, no. 163 (M-152), 26 août 1982 (1982-08-26) & JP 57 077234 A (HONDA MOTOR CO LTD), 14 mai 1982 (1982-05-14)

## Description

La présente invention concerne un système d'éclairage à fonction virage destiné à la deuxième monte.

On rappelle que la fonction virage permet d'éclairer, lorsqu'un véhicule se déplace sur une trajectoire incurvée, les portions de route qui sont destinées à être abordées par le véhicule et qui se trouvent à l'avant et sur le côté de celui-ci, à l'intérieur du virage.

On connaît du document US 2002/0080617 un dispositif de commande de la distribution des rayons lumineux émis par les projecteurs d'un véhicule. L'éclairement et l'éblouissement sont contrôlés en fonction de la détermination des conditions de circulation telles qu'une autoroute, une route nationale ou en zone urbaine, et une direction d'éclairage est commandée en fonction de la forme de la route. Un calculateur de navigation détermine la fiabilité de la détection de la position du véhicule, de la forme de la route et des conditions de circulation. L'orientation du véhicule est détectée par un capteur du magnétisme terrestre, et le calculateur de navigation détermine la direction de l'éclairage en fonction de l'angle de braquage détecté par un capteur d'angle volant.

Il a été proposé dans le document EP-B-0 832 785 un système d'éclairage pour véhicule automobile comportant deux projecteurs latéraux fixes par rapport au véhicule et émettant des faisceaux de type antibrouillard. Les deux projecteurs sont reliés à une unité de gestion qui commande l'alimentation de leurs lampes en fonction d'informations relatives au braquage des roues du véhicule. Ces informations sont fournies par un capteur qui suit les rotations de la colonne de direction du volant.

Ce type de système est désormais couramment désigné sous l'appellation FBL (Fix Bending Light en anglais).

Pour réaliser un FBL en deuxième monte (sur le marché de la rechange), il est nécessaire de fournir une information suffisamment fiable relative aux courbures de la route ceci indépendamment de l'architecture électrique de voiture.

En effet, l'angle au volant n'est pas disponible ou facilement accessible et est en outre présenté généralement dans un format spécifique.

On connaît un système d'éclairage en virage dont le principe de fonctionnement, décrit dans le document EP-A-1 052 141, est composé de deux projecteurs de complément (un droit et un gauche) et d'une commande électronique. L'allumage des projecteurs est commandé par un gyroscope qui mesure chaque « rotation » de la voiture. Plus précisément, ce système utilise un accéléromètre angulaire (yaw sensor rate en anglais) ou capteur de lacet mesurant l'accélération transverse.

Ce type de capteur est très sensible aux mouvements des roues directrices, et requiert un positionnement précis à l'intérieur du véhicule sous peine de confusions entre les forces latérales et les forces rotationnelles.

Aussi, on constate des allumages intempestifs, en particulier sur des routes à surface irrégulières, et une grande sensibilité aux chocs.

Le document US 2003/0138132 montre un système d'éclairage similaire, qui est destiné au marché de l'équipement d'origine.

L'invention vise à fournir un système d'éclairage à fonction virage autonome, c'est-à-dire n'utilisant pas les données éventuellement disponibles ou accessibles dans le véhicule et fiable.

A cet effet, l'invention propose un système d'éclairage selon la revendication 1. De préférence, le compas électronique comporte au moins un capteur de champ magnétique terrestre générant une information indicatrice de changement de direction.

Avantageusement, le compas électronique comporte au moins deux capteurs de champ magnétique terrestre orientés sensiblement à 90° l'un de l'autre de façon à générer une information indicatrice d'un changement de direction.

Les capteurs selon l'invention satisfont aux objectifs précités : autonomie et fiabilité. Deux capteurs sont nécessaires pour obtenir la détection d'un virage.

La détection d'un virage s'obtient de manière relative c'est à dire à partir de la connaissance des variations des mesures des deux capteurs, avec une lecture suffisamment rapide des mesures des capteurs. En effet, la direction réelle du véhicule importe peu et seul, un changement de direction est à détecter. Par exemple, si un véhicule roule en direction du Nord, puis au Nord-Est, l'éclairage en virage ne se fera que pendant le changement de direction. Lorsque le véhicule sera de nouveau sur une portion droite de la route, l'éclairage de virage sera éteint.

Les moyens de détection de virage selon l'invention ne sont ni sensibles à une simple variation d'altitude (pente, côte, route irrégulière) ni aux accélérations linéaires du véhicule ou à de brefs mouvements du volant sur une route rectiligne.

Dans un mode de réalisation préféré, chacun des capteurs est apte à délivrer une tension continue proportionnelle à l'angle entre la direction du capteur et le champ magnétique terrestre.

Avantageusement, les moyens de détection comprennent des moyens de traitement de mesures aptes à calculer une variation d'angle du véhicule par rapport à une direction donnée à partir des mesures des capteurs.

De préférence, des moyens de traitement des mesures sont aptes à délivrer un signal porteur desdites informations sous forme numérique ou analogique.

De préférence, le dispositif de contrôle selon l'invention peut comprendre des moyens couplés aux moyens de commande et aptes à fournir un signal porteur de l'information vitesse du véhicule.

De cette façon, il est possible d'ajuster la rapidité de la commande du système d'éclairage et l'intensité des lampes.

Le dispositif selon l'invention est particulièrement adapté pour un dispositif FBL vendu en accessoire.

Aussi, dans un premier mode de réalisation de l'invention, les moyens de commande sont aptes à alimenter les lampes dudit système d'éclairage.

Toutefois le dispositif peut aussi être conçu pour un système d'éclairage à fonction virage de type dynamique déjà connu sous le nom de DBL (Dynamic Bending Light en anglais).

Aussi, dans un deuxième mode de réalisation de l'invention, le système d'éclairage comportant des projecteurs mobiles en rotation, les moyens de commande sont aptes à commander les moyens d'orientation des projecteurs.

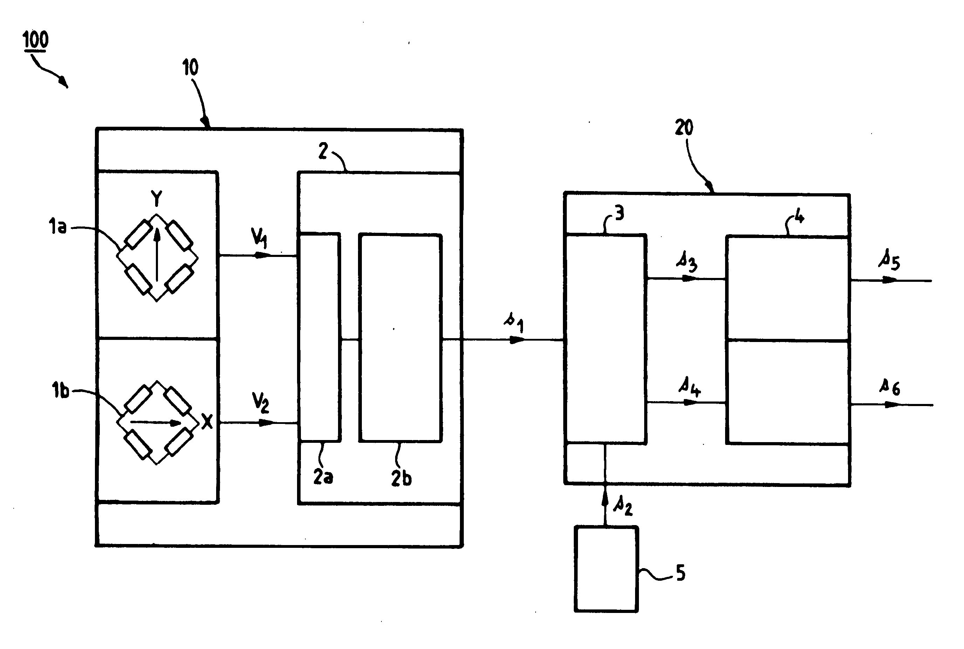

D'autres caractéristiques et avantages de l'invention ressortiront encore de la description qui suit. Cette description est purement illustrative et non limitative. Elle doit être lue en regard de la figure annexée correspondant à une représentation schématique d'un dispositif de contrôle d'un système d'éclairage pour véhicule automobile conformément à un mode de réalisation préféré de l'invention.

Le dispositif de contrôle 100 pilote un système d'éclairage pour véhicule automobile (non représenté) de préférence de type FBL et vendu en accessoire lequel comprend deux projecteurs fixes émettant des faisceaux à coupure de type anti-brouillard.

Le dispositif de contrôle 100 est doté de moyens de détection de virage 10 couplés à des moyens de commande 20 de l'alimentation des lampes des projecteurs.

Les moyens de détection de virage 10 peuvent comporter un capteur de champ magnétique, constitué d'un barreau ou d'une aiguille magnétique, susceptible de s'orienter en fonction du champ magnétique terrestre ambiant. La position angulaire de ce barreau ou de cette aiguille peuvent être détectés par un potentiomètre de recopie, ou par l'interruption des faisceaux lumineux reçus par des éléments photosensibles disposés en couronne et devant lesquels passe le barreau ou l'aiguille. On détecte ainsi une variation de l'orientation du véhicule, et le sens de cette variation.

Les moyens de détection de virage 10 peuvent également comprendre deux capteurs de champ magnétique terrestre 1a, 1b respectivement orientés sensiblement à 90° l'un de l'autre, de préférence dans un plan horizontal défini par deux axes perpendiculaires Y, X.

Chacun des capteurs de champ magnétique terrestre 1a, 1b délivre une tension continue analogique V₁, V₂ proportionnelle au niveau de champ magnétique terrestre qu'il capte dans son axe Y, X. Les tensions V₁ et V₂ peuvent aussi s'exprimer avec une relation de proportionnalité en fonction de l'angle entre l'axe du capteur Y, X et le champ magnétique terrestre.

Les tensions analogiques V₁, V₂ sont transmises à des moyens de traitement de mesures 2. Un calculateur 2b va délivrer en sortie un signal s₁ porteur de l'information de variation d'angle du véhicule par rapport à une direction donnée et donc indicatrice d'un virage, ceci à partir des variations lues des tensions V₁, V₂.

Avant leur exploitation par le calculateur, les tensions V₁, V₂ sont de préférence converties en valeurs numériques par des moyens de conversion 2a, par exemple un préamplificateur. De même, le signal de sortie s₁ qui est porteur de l'information de variation d'angle est sous format numérique.

Une unité de calcul 3 prévue dans les moyens de commande 20 recueille l'information de variation d'angle et génère en sortie des signaux de consigne s₃, s₄ sous format numérique commandant les drivers 4 des lampes des projecteurs.

L'unité de calcul 3 peut intégrer des moyens d'analyse des variations d'angles pour en déduire une consigne d'allumage ou non des projecteurs suivant un algorithme approprié, par exemple seulement pour une variation d'angle au volant supérieure à 20°.

De préférence, l'unité de calcul 3 reçoit en outre un signal s₂ porteur l'information de la vitesse du véhicule grâce à des moyens 5 prévus à cet effet, ceci afin d'ajuster de façon optimale les signaux de consigne s_{3,}, s₄.

Les drivers 4 fournissent deux signaux de préférence PWM (Pulse Width Modulation en anglais) s₅, s₆ capables d'alimenter indépendamment et correctement les lampes de chaque projecteur, sans surconsommation électrique. Les alimentations des deux projecteurs sont choisies distinctes, de façon à accentuer l'éclairage d'un côté ou de l'autre selon que le véhicule tourne à droite ou à gauche.

La fréquence de ces signaux s₅, s₆ est fixe, mais leur rapport cyclique est variable pour une intensité de la lampe évoluant entre le début et la fin de chaque virage.

On peut prévoir de réaliser une amplification du courant d'alimentation ainsi qu'un lissage afin d'éviter aux lampes de supporter un courant carré. On peut aussi prévoir une protection contre les court-circuits et un diagnostic de l'état des lampes.

La valeur seuil au dessus de laquelle les lampes sont allumées est choisie suffisante pour ne pas provoquer des séquences d'allumage et d'extinction trop fréquentes, qui pourraient gêner le conducteur.

Le dispositif de contrôle 100 est de préférence disposé dans une zone du véhicule automobile protégée des perturbations électromagnétiques, par exemple à proximité du rétroviseur ou du pare chocs et suffisamment éloignée des de sources perturbatrices telles que les essuies glaces.

Le dispositif de contrôle 100 est alimenté par le véhicule (12 V après contact).

Les moyens de détection de virage 10 peuvent être vendus séparément par exemple en cas de réparation.

Le système d'éclairage (projecteurs, lampes ...) et le dispositif de contrôle (moyens de détection de virage et moyens de commande) peuvent être vendus ensemble ou séparément.

Dans une variante, le dispositif de contrôle est associé à un système d'éclairage de type DBL, auquel cas l'unité de calcul 3 commande au moins un moteur utilisé pour orienter correctement les projecteurs de type mobiles en rotation du système d'éclairage.

## Revendications

1. Système d'éclairage à fonction virage pour véhicule automobile, destiné au marché de la deuxième monte, comprenant un dispositif de contrôle (100), le dispositif comprenant des moyens de détection de virage autonomes (10) générant une indication de changement de direction, et des moyens de commande (20) du système d'éclairage, ces moyens de détection comportant un compas électronique.

2. Système d'éclairage selon la revendication 1 **caractérisé en ce que** le compas électronique comporte au moins un capteur de champ magnétique terrestre générant une information indicatrice de virage.

3. Système d'éclairage selon la revendication 1 **caractérisé en ce que** le compas électronique comporte au moins deux capteurs de champ magnétique terrestre (1a, 1b) orientés sensiblement à 90° l'un de l'autre de façon à générer une information indicatrice d'un virage.

4. Système d'éclairage selon l'une des revendications précédentes, **caractérisé en ce que** chacun des capteurs est apte à délivrer une tension continue (V₁, V₂) proportionnelle à l'angle entre la direction (Y, X) du capteur (1a, 1b) et le champ magnétique terrestre.

5. Système d'éclairage selon l'une des revendications 1 à 4 **caractérisé en ce qu'**ils comprennent des moyens de traitement de mesures (2) aptes à calculer une variation d'angle du véhicule par rapport à une direction donnée à partir des mesures (V₁, V₂) des capteurs (1a, 1b).

6. Système d'éclairage selon la revendication 5 **caractérisé en ce que** les moyens de traitement de mesure sont aptes à délivrer un signal (s₁) porteur de l'information indicatrice sous forme numérique ou analogique.

7. Système d'éclairage à fonction virage selon l'une des revendications 1 à 6 **caractérisé en ce qu'**il comprend des moyens (5) couplés aux moyens de commande (20, 3) et aptes à fournir un signal (s₂) porteur de l'information vitesse du véhicule.

8. Système d'éclairage à fonction virage selon la revendication 7 **caractérisé en ce que** les moyens de commande (20, 4) sont aptes à alimenter les lampes dudit système d'éclairage.

9. Système d'éclairage à fonction virage selon la revendication 7 **caractérisé en ce que**, le système d'éclairage comportant des projecteurs mobiles en rotation, les moyens de commande sont aptes à commander les moyens d'orientation des projecteurs.

## Claims

1. Lighting system with a bend function for a motor vehicle, destined for the spares market, comprising a control device (100), the device comprising autonomous means (10) for detection of a bend, which generate indication of a change of direction, and means (20) for controlling the lighting system, these detection means comprising an electronic compass.

2. Lighting system according to claim 1, **characterised in that** the electronic compass comprises at least one terrestrial magnetic field sensor which generates information indicative of a bend.

3. Lighting system according to claim 1, **characterised in that** the electronic compass comprises at least two terrestrial magnetic field sensors (1a, 1b) which are oriented at substantially 90° from one another, such as to generate information indicative of a bend.

4. Lighting system according to one of the preceding claims, **characterised in that** each of the sensors can supply a direct voltage (V₁, V₂) which is proportional to the angle between the direction (Y, X) of the sensor (1a, 1b) and the terrestrial magnetic field.

5. Lighting system according to one of claims 1 to 4, **characterised in that** it comprises measurement processing means (2) which can calculate a variation of angle of the vehicle relative to a given direction, on the basis of the measurements (V₁, V₂) by the sensors (1a, 1b).

6. Lighting system according to claim 5, **characterised in that** the measurement processing means can supply a signal (s₁) which carries the indicative information in digital or analogue form.

7. Lighting system with a bend function according to one of claims 1 to 6, **characterised in that** it comprises means (5) which are coupled to the control means (20, 3) and can supply a signal (s₂) which carries the information relating to the speed of the vehicle.

8. Lighting system with a bend function according to claim 7, **characterised in that** the control means (20, 4) can supply the lamps of the said lighting system.

9. Lighting system with a bend function according to claim 7, **characterised in that**, since the lighting system comprises headlights which are mobile in rotation, the control means can control the means for orientation of the headlights.

## Patentansprüche

1. Kurvenlichtsystem für Kraftfahrzeuge, das zur Nachrüstung bestimmt ist, mit einer Steuervorrichtung (100), wobei die Vorrichtung eigenständige Mittel (10) zur Kurvenerkennung, die eine Richtungsänderungsanzeige erzeugen, und Mittel (20) zur Betätigung des Lichtsystems umfasst, wobei die Erkennungsmittel einen elektronischen Kompass aufweisen.

2. Lichtsystem nach Anspruch 1,
**dadurch gekennzeichnet, dass** der elektronische Kompass wenigstens einen Erdmagnetfeld-Sensor umfasst, der eine Kurvenanzeigeinformation erzeugt.

3. Lichtsystem nach Anspruch 1,
**dadurch gekennzeichnet, dass** der elektronische Kompass wenigstens zwei Erdmagnetfeld-Sensoren (1a, 1b) umfasst, die zueinander im Wesentlichen in einem Winkel von 90° ausgerichtet sind, um eine Kurvanzeigeinformation zu erzeugen.

4. Lichtsystem nach einem der vorhergehenden Ansprüche,
**dadurch gekennzeichnet, dass** jeder der Sensoren eine Gleichspannung (V₁, V₂) zu liefern vermag, die proportional zum Winkel zwischen der Richtung (Y, X) des Sensors (1a, 1b) und dem Erdmagnetfeld ist.

5. Lichtsystem nach einem der Ansprüche 1 bis 4,
**dadurch gekennzeichnet, dass** es Mittel (2) zur Verarbeitung der Messungen umfasst, die auf Grundlage der Messungen (V₁, V₂) der Sensoren (1a, 1b) eine Winkeländerung des Fahrzeugs bezüglich einer gegebenen Richtung zu errechnen vermögen.

6. Lichtsystem nach Anspruch 5,
**dadurch gekennzeichnet, dass** die Mittel zur Verarbeitung der Messungen ein Signal (s₁) zu liefern vermögen, das die Anzeigeinformation in digitaler oder analoger Form trägt.

7. Kurvenlichtsystem nach einem der Ansprüche 1 bis 6,
**dadurch gekennzeichnet, dass** es Mittel (5) umfasst, die mit den Betätigungsmitteln (20, 3) gekoppelt sind und ein Signal (s₂) zu liefern vermögen, das die Fahrzeuggeschwindigkeitsinformation trägt.

8. Kurvenlichtsystem nach Anspruch 7,
**dadurch gekennzeichnet, dass** die Betätigungsmittel (20, 4) die Lampen des Lichtsystems zu speisen vermögen.

9. Kurvenlichtsystem nach Anspruch 7,
**dadurch gekennzeichnet, dass** die Betätigungsmittel die Mittel zur Scheinwerferausrichtung zu betätigen vermögen, wenn das Lichtsystem drehbewegliche Scheinwerfer umfasst.
